# EUROPEAN PATENT SPECIFICATION

(11) **EP 3 388 259 B1**
(45) Date of publication and mention of the grant of the patent: **05.02.2020**
(21) Application number: 16872940.8
(22) Date of filing: 05.12.2016
(51) Int. Cl.: B60C 11/13, B60C 1/00, B60C 5/01, B60C 5/00, B60C 11/03

(54) **TIRE**
REIFEN
PNEUMATIQUE

(30) Priority: 07.12.2015 JP 2015238902
(43) Date of publication of application: 17.10.2018
(73) Proprietor: Bridgestone Corporation, Tokyo 104-8340 (JP)
(72) Inventor: KIWAKI, Yukihiro, Tokyo 104-8340 (JP)
(74) Representative: Oxley, Robin John George
(86) International application number: PCT/JP2016/086112
(87) International publication number: WO 2017/099042

(56) References cited:
- EP-A1- 0 646 480
- EP-A1- 2 614 967
- WO-A1-2012/033204
- WO-A1-2014/167763
- JP-A- H01 257 606
- JP-A- H03 143 701
- JP-A- 2011 207 165
- JP-A- 2014 168 997
- JP-U- H0 283 103
- US-B1- 6 796 350

## Description

### TECHNICAL FIELD

The present disclosure relates to a tread pattern of a tire in which a tire frame member is formed using a resin material.

### BACKGROUND ART

With a view to reducing weight and facilitating recycling, thermoplastic resins, thermoplastic elastomers and the like have been proposed for use as tire materials. For example, Japanese Patent Application Laid-Open (JP-A) No. H03-143701 discloses a pneumatic tire in which a tire frame member is molded using a thermoplastic polymer material. Reference is also made to JP 2011-207165.

### SUMMARY OF INVENTION

### TECHNICAL PROBLEM

However, a tire in which a tire frame member is formed of a resin material is characterized by stiffness of the tire frame member being higher than in an ordinary rubber tire in which a tire frame member is a carcass formed of rubber and carcass cords. Therefore, in order to satisfactorily express various tire characteristics (wear resistance, steering stability and so forth) in a tire in which a tire frame member is formed of a resin material, a tread pattern appropriate for the characteristics of the tire frame member is called for.

The present disclosure is made in consideration of the circumstances described above; an object of the present disclosure is to provide a tread pattern that is appropriate for the characteristics of a tire provided with a tire frame member formed of a resin material, with particular focus on improving drainage performance.

### SOLUTION TO PROBLEM

A tire according to a first aspect of the present disclosure includes: a tire frame member formed of a resin material, the tire frame member including a bead portion, a side portion that extends toward a tire radial direction outer side from the bead portion, and a crown portion that extends toward a tire width direction inner side from the side portion; and a tread formed of a rubber material, the tread being disposed at the tire radial direction outer side of the tire frame member, a plurality of circumferential direction grooves that extend in a tire circumferential direction being formed in a tread surface, and a groove width of a circumferential direction groove having a widest groove width along the tire width direction being within a range of from 5% to 15% of a ground contact width of the tread surface, wherein the ground contact ends of a top tread are regions that are loaded with a maximum load performance when the tire is mounted to a standard rim complying with the JATMA YEAR BOOK (from the Japan Automobile Tire Manufacturers Association, 2015 edition) and charged with air pressure to 100% of an air pressure corresponding with the maximum load performance (the bold-text load in the table of internal pressure against load performance) in the JATMA YEAR BOOK for the employed size and ply rating; the ground contact width is a dimension measured along the tire width direction from one of the ground contact ends to another of the ground contact ends; the resin material of the tire frame member is a thermoplastic resin or a thermoplastic elastomer, characterized in that a plurality of tire structure members are bonded together to form the tire frame member; a bonding portion that bonds the plurality of the tire structure members together is formed continuously in the tire circumferential direction at the crown portion; viewed in the tire radial direction, the circumferential direction groove having the widest groove width is disposed at a location that is separated in the tire width direction from the bonding portion; and a belt layer is provided at an outer periphery face of the crown portion, and the belt layer is formed by winding cords covered with resin in helical patterns along the tire circumferential direction.

In the tire of the first aspect, because the tire frame member is formed of the resin material, out-of-plane bending stiffness is higher than in an ordinary rubber tire in which a tire frame member is a carcass. Therefore, even though the groove width of the circumferential direction groove having the widest groove width among the plurality of circumferential direction grooves formed in the tread (below referred to as "the wide circumferential direction groove" as appropriate) is set within the range of from 5% to 15% of the ground contact width of the tread surface and drainage is greatly improved, the out-of-plane bending stiffness may be assured and occurrences of buckling originating from the wide circumferential direction groove may be suppressed. In particular, because the tire frame member is formed of the resin material in the tire of the first aspect, the out-of-plane bending stiffness may be assured without, for example, disposing an additional reinforcing layer or the like on a carcass as in a rubber tire.

In the tire according to the first aspect: a plurality of tire structure members are bonded together to form the tire frame member; a bonding portion that bonds the plurality of the tire structure members together is formed continuously in the tire circumferential direction at the crown portion; and viewed in the tire radial direction, the circumferential direction groove having the widest groove width is disposed at a location that is separated in the tire width direction from the bonding portion.

In the tire of the first aspect, because the wide circumferential direction groove is disposed at a location that is separated in the tire width direction from the bonding portion formed at the crown portion, as seen in the tire radial direction, out-of-plane bending stiffness may be more assured than in, for example, a structure in which a bonding portion and a wide circumferential direction groove are disposed to overlap.

In a tire according to a second aspect of the present disclosure, in the tire according to the first aspect, at least a portion of the circumferential direction groove having the widest groove width is disposed within a range of from 0% to 25% of the ground contact width along the tire width direction from a tire equator plane.

In the tire of the second aspect, because at least a portion of the wide circumferential direction groove is disposed within the range of from 0% to 25% of the ground contact width along the tire width direction from the tire equator plane, drainage in the vicinity of the tire equator, at which the length of the ground contact is longest, may be greatly improved.

In a tire according to a third aspect of the present disclosure, in the tire according to the first aspect or the second aspect, a plurality of groove portions extending in the tire circumferential direction are formed in a floor portion of the circumferential direction groove having the widest groove width, the groove portions being spaced apart in the tire circumferential direction. The meaning of the term "extending in the tire circumferential direction" as used here is intended to include cases in which the groove portions extend along the tire circumferential direction and cases in which the groove portions extend at an angle to the tire circumferential direction.

In the tire of the third aspect, because the groove portions are formed in the floor portion of the wide circumferential direction groove, drainage capacity of the wide circumferential direction groove is improved compared to, for example, a structure in which no groove portions are formed in a floor portion of a wide circumferential direction groove. Moreover, because the groove portions in the floor portion of the wide circumferential direction groove are formed to be spaced apart in the tire circumferential direction, out-of-plane bending stiffness of a region corresponding to the wide circumferential direction groove may be more assured than in, for example, a structure in which a groove portion is formed in a floor portion of a wide circumferential direction groove to be continuous in the tire circumferential direction.

### ADVANTAGEOUS EFFECTS OF INVENTION

As described above, the present disclosure may provide a tread pattern that improves drainage of a tire provided with a tire frame member formed of a resin material.

### BRIEF DESCRIPTION OF DRAWINGS

Fig. 1 is a plan view showing a tread of a tire according to an exemplary embodiment of the present disclosure.
Fig. 2 is a sectional diagram of the tire according to the exemplary embodiment of the present disclosure, showing a vehicle width direction outer side bounded by a tire equator plane when the tire is mounted to a vehicle.
Fig. 3 is a sectional diagram of the tire according to the exemplary embodiment of the present disclosure, showing the vehicle width direction inner side bounded by the tire equator plane when the tire is mounted to the vehicle.
Fig. 4 is a sectional diagram showing a first width direction groove in a view orthogonal to a length direction of the first width direction groove.
Fig. 5 is a vertical sectional diagram showing a pin sipe.
Fig. 6 is a sectional diagram showing a shallow groove in a view orthogonal to a length direction of the shallow groove.
Fig. 7 is a sectional diagram showing a shallow groove in a view orthogonal to a length direction of the shallow groove.
Fig. 8 is a sectional diagram showing a first angled groove in a view orthogonal to a length direction of the first angled groove.
Fig. 9 is a sectional diagram showing a second angled groove in a view orthogonal to a length direction of the second angled groove.
Fig. 10 is a sectional diagram showing a shallow groove in a view orthogonal to a length direction of the shallow groove
Fig. 11 is a sectional diagram showing a second angled groove and a shallow groove in a view orthogonal to a length direction of the second angled groove and shallow groove.
Fig. 12 is a sectional diagram showing a narrow groove in a view orthogonal to a length direction of the narrow groove.
Fig. 13 is a sectional diagram showing an inner side width direction groove in a view orthogonal to a length direction of the inner side width direction groove.

### DESCRIPTION OF EMBODIMENTS

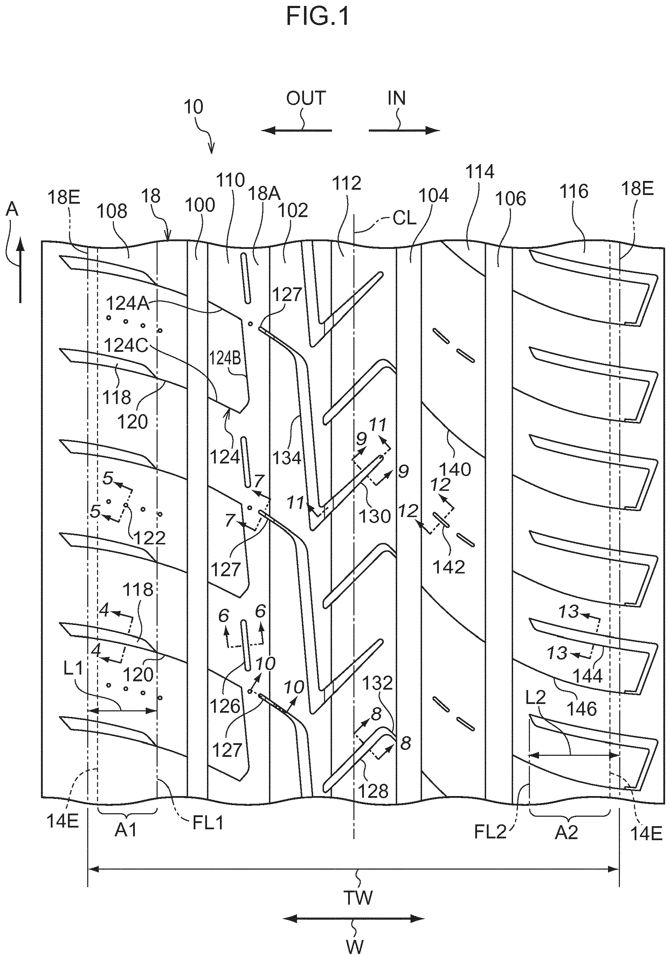

A tire 10 according to an exemplary embodiment of the tire of the present disclosure is described below in accordance with Fig. 1 to Fig. 13. Arrow W in the drawings indicates a direction (below referred to as "the tire width direction") parallel to a turning axis of the tire, and arrow R indicates a direction (below referred to as the "tire radial direction") that passes through the rotation axis of the tire and is orthogonal to the tire width direction. Arrow A indicates a turning direction of the tire (below referred to as "the tire circumferential direction"). The term "radial direction" as used herein refers to directions orthogonal to the tire circumferential direction, including the tire radial direction and the tire width direction. The tire 10 according to the present exemplary embodiment is for an automobile. The tire size of the tire 10 is PSR245/35R21.

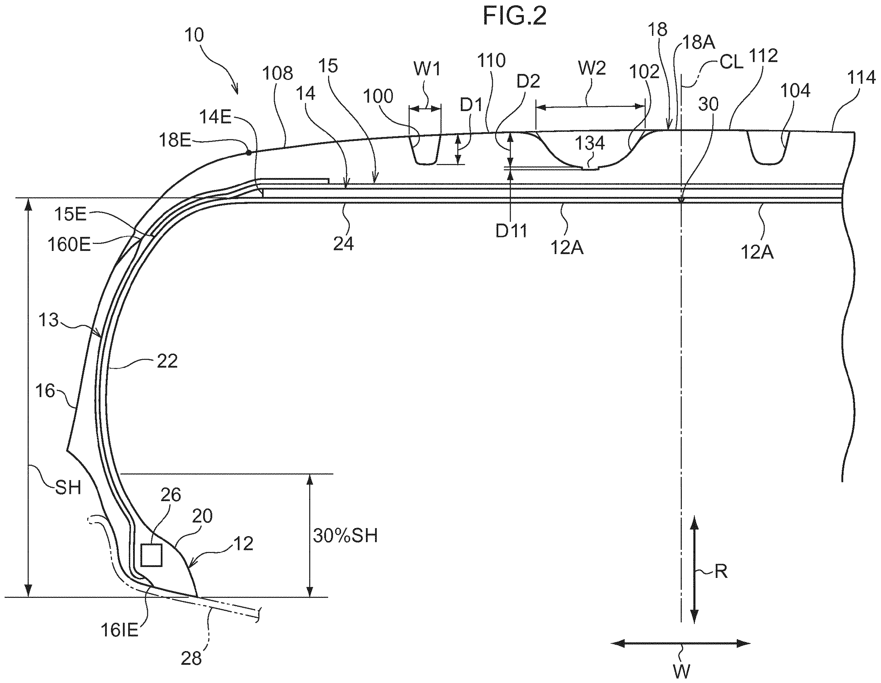

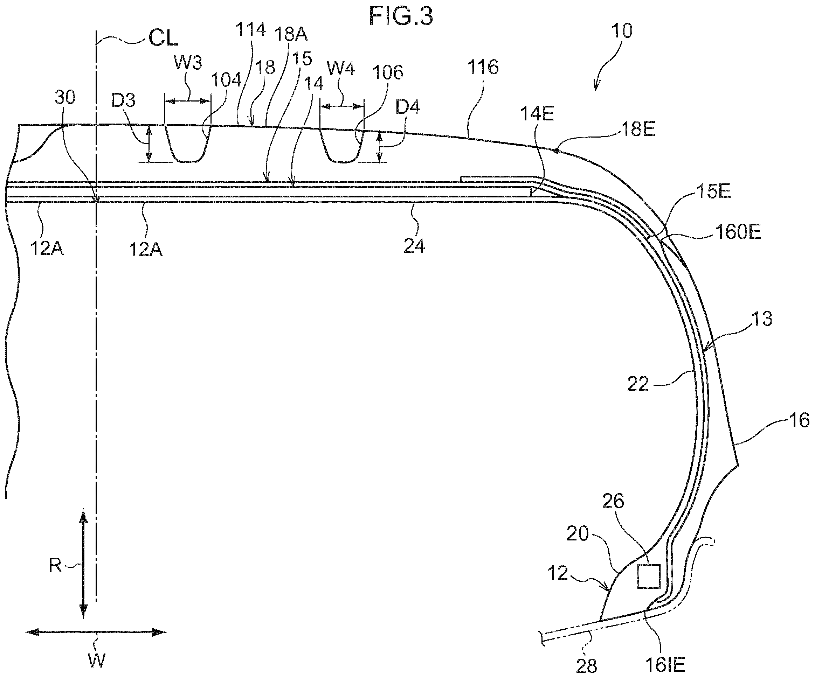

As shown in Fig. 2 and Fig. 3, the tire 10 according to the exemplary embodiment is provided with a tire frame member 12, a side reinforcement layer 13, a belt layer 14, a belt upper reinforcement layer 15, a side tread 16 and a top tread 18.

### - Tire frame member-

The tire frame member 12 is formed of a resin material, and is formed in an annular shape by a pair of tire pieces 12A being bonded together in the tire width direction. Note that the tire frame member 12 may be formed by bonding three or more of the tire pieces 12A. The tire pieces according to the present exemplary embodiment are an example of "tire structure members" of the present disclosure.

The tire frame member 12 includes a pair of bead portions 20, a pair of side portions 22 that respectively extend to the tire radius direction outer side from the pair of bead portions 20, and a crown portion 24 that extends toward tire width direction inner sides from the side portions 22.

In the tire frame member 12 according to the present exemplary embodiment, the term "bead portions 20" refers to the tire frame member 12 from the tire radial direction inner side end thereof to 30% of a sectional height SH, and the term "crown portion 24" refers to a region of the tire frame member 12 at which the top tread 18 is disposed.

A thermoplastic resin or a thermoplastic elastomer (TPE) with a resilience equivalent to rubber is employed as the resin material constituting the tire frame member 12. With regard to resilience during running and moldability during fabrication, it is desirable to employ a thermoplastic elastomer. The whole of the tire frame member 12 may be formed of this resin material, or just a portion of the tire frame member 12 may be formed of this resin material.

As a thermoplastic elastomer, polyolefin-based thermoplastic elastomers (TPO), polystyrene-based thermoplastic elastomers (TPS), polyamide-based thermoplastic elastomers (TPA), polyurethane-based thermoplastic elastomers (TPU) polyester-based thermoplastic elastomers (TPC), dynamically vulcanized thermoplastic elastomers (TPV) and the like may be mentioned.

As a thermoplastic resin, polyurethane resins, polyolefin resins, vinyl chloride resins, polyamide resins and the like may be mentioned. For example, a thermoplastic resin that may be employed has a deflection temperature under load as defined in ISO 75-2 or ASTM D648 (with a 0.45 MPa load) of at least 78°C, a tensile yield strength as defined in JIS K7113 of at least 10 MPa, a tensile elongation at break as defined in JIS K7113 of at least 50%, and a Vicat softening temperature as defined in JIS K7206 (method A) of at least 130°C.

A bead core 26 is embedded in each bead portion 20 of the tire carcass member 12. A metal, organic fiber, organic fiber covered with resin, hard resin or the like may be employed as a material constituting the bead core 26. Note that the bead core 26 may be omitted, provided stiffness of the bead portion 20 is assured and there is no problem with fitting to a rim 28.

A bonding portion 30 formed of a resin material is provided at a central portion in the tire width direction of the crown portion 24, between the pair of tire pieces 12A of the tire frame member 12. That is, the bonding portion 30 is provided on a tire equator plane CL. The bonding portion 30 is formed in a substantially trapezoid shape in a sectional view. The pair of tire pieces 12A are joined to one another by being bonded to two side faces of the bonding portion 30. Therefore, the bonding portion 30 that bonds the tire pieces 12A to one another is formed continuously in the tire circumferential direction at the crown portion 24 of the tire frame member 12.

Note that the pair of tire pieces 12A according to the present exemplary embodiment are an example of "a plurality of tire structure members" of the present disclosure.

The bonding portion 30 may be formed using a thermoplastic resin of the same type or a different type from the tire pieces 12A, or a molten resin or the like. Further, the tire pieces 12A may be continuously joined without the bonding portion 30 being employed. In this case, a hot plate welding method, in which a hot plate is sandwiched between end portions of the tire pieces 12A and the end portions are fused to one another by being pushed in directions towards one another while the hot plate is being removed, a method of adhering the tire pieces 12A to one another with an adhesive, or the like may be employed.

### - Belt layer -

The belt layer 14 is provided at an outer periphery face of the crown portion 24. The belt layer 14 is formed by winding cords covered with resin in helical patterns along the tire circumferential direction. In the present exemplary embodiment, steel cords are employed as the cords used for the belt layer 14. However, the present disclosure is not limited thus. The belt layer 14 may be formed of angled cord layers in each of which cords that extend at an angle relative to the tire equator plane CL are arrayed at intervals in the tire circumferential direction and are together covered with resin. In a structure in which plural angled cord layers are superposed, it is preferable to adjust the cord angles such that cords in adjacent angled cord layers are angled in opposite directions to one another relative to the tire equator plane CL.

### - Belt Upper Reinforcement Layer -

The belt upper reinforcement layer 15 is disposed to cover the belt layer 14 at the tire radial direction outer side of the belt layer 14. The belt upper reinforcement layer 15 extends from the side of the tire equator plane CL over an end portion 14E of the belt layer 14 to the tire width direction outer side thereof and terminates in a vicinity of a boundary between the side portion 22 and the crown portion 24.

The belt upper reinforcement layer 15 is provided with plural reinforcing cords covered with rubber. The reinforcing cords of the belt upper reinforcement layer 15 are monofilaments (single strands) of organic fiber or multifilaments (twisted strands) in which organic fibers are twisted together. The reinforcing cords extend in the tire width direction and are arrayed in the tire circumferential direction. The reinforcing cords of the belt upper reinforcement layer 15 may be angled at an angle of 10° or less relative to the tire width direction.

A material such as a nylon, PET, glass, alamide or the like may be employed for the organic fibers. A metal such as steel or the like may also be employed for the material of the reinforcing cords. The belt upper reinforcement layer 15 may have a structure in which the reinforcing cords are covered with a resin rather than a rubber.

### - Side Reinforcement Layer -

The side reinforcement layer 13 is disposed at a tire outer side face side of the tire frame member 12. The side reinforcement layer 13 extends from the tire radial direction inner side of the bead core 26 along the outer face of the tire frame member 12 toward the tire radial direction outer side. The side reinforcement layer 13 extends further along an outer face of the belt upper reinforcement layer 15 toward the tire equator plane CL side, passing over an end portion 15E of the belt upper reinforcement layer 15 and the end portion 14E of the belt layer 14, and terminates in a vicinity of the end portion 14E of the belt layer 14.

The side reinforcement layer 13 is provided with plural reinforcing cords covered with rubber. The reinforcing cords of the side reinforcement layer 13 are monofilaments (single strands) of organic fiber or multifilaments (twisted strands) in which organic fibers are twisted together. The reinforcing cords extend in a tire radial direction (the tire radial direction) and are arrayed in the tire circumferential direction. The reinforcing cords of the side reinforcement layer 13 may be angled at an angle of 10° or less relative to the tire radial direction.

A material such as a nylon, PET, glass, alamide or the like may be employed for the organic fibers. A metal such as steel or the like may also be employed for the material of reinforcing cords. The side reinforcement layer 13 may have a structure in which the cords are covered with a resin rather than a rubber.

### - Side Tread -

A pair of the side treads 16 are provided at outer periphery faces of the side reinforcement layer 13. Each side tread 16 extends from the bead portion 20 of the tire frame member 12 at the tire width direction outer side of the crown portion 24. The side treads 16 may employ a rubber of the same type as a rubber that is employed for the side walls of a conventional pneumatic tire fabricated of rubber.

An end portion 16IE at the tire radial direction inner side of the side tread 16 extends toward an inner periphery face of the bead portion 20 of the tire frame member 12, more specifically to the tire radial direction inner side of the bead core 26. An end portion 16OE at the tire radial direction outer side of the side tread 16 is disposed in a vicinity of the end portion 15E of the belt upper reinforcement layer 15.

### - Top Tread -

The top tread 18, which serves as the tread, is disposed at the tire radial direction outer side of the belt upper reinforcement layer 15. The top tread 18 is formed of a rubber with more excellent wear endurance than the resin material forming the tire frame member 12. The top tread 18 may employ a rubber of the same type as a tread rubber employed in a conventional pneumatic tire fabricated of rubber.

As shown in Fig. 1, a first circumferential direction groove 100, a second circumferential direction groove 102, a third circumferential direction groove 104 and a fourth circumferential direction groove 106 are formed to extend continuously in the tire circumferential direction (the direction of arrow A and the opposite direction to the direction of arrow A) in a tread surface 18A of the top tread 18 (an example of a "tread surface" of the present disclosure). The first circumferential direction groove 100, second circumferential direction groove 102, third circumferential direction groove 104 and fourth circumferential direction groove 106 are formed in this order from a vehicle width direction outer side (the side in the direction of arrow OUT), when the tire 10 according to the present exemplary embodiment is mounted to a vehicle, toward the vehicle width direction inner side (the side in the direction of arrow IN). The first circumferential direction groove 100, second circumferential direction groove 102, third circumferential direction groove 104 and fourth circumferential direction groove 106 are an example of "circumferential direction grooves" of the present disclosure.

As shown in Fig. 2, a cross section of the first circumferential direction groove 100 in a direction orthogonal to the length direction of the first circumferential direction groove 100 appears as a substantial "U" shape. A groove width W1 of the first circumferential direction groove 100 is 8.2 mm and a groove depth D1 is 7.8 mm.

As shown in Fig. 2, a cross section of the second circumferential direction groove 102 in a direction orthogonal to the length direction of the second circumferential direction groove 102 appears as a substantially semicircular shape. A groove width W2 of the second circumferential direction groove 102 is 25 mm and a groove depth D2 is 8.3 mm.

As shown in Fig. 3, a cross section of the third circumferential direction groove 104 in a direction orthogonal to the length direction of the third circumferential direction groove 104 appears as a substantial "U" shape. A groove width W3 of the third circumferential direction groove 104 is 10.5 mm and a groove depth D3 is 8.3 mm.

As shown in Fig. 3, a cross section of the fourth circumferential direction groove 106 in a direction orthogonal to the length direction of the fourth circumferential direction groove 106 appears as a substantial "U" shape. A groove width W4 of the fourth circumferential direction groove 106 is 10.5 mm and a groove depth D4 is 7.8 mm.

The groove width W2 of the second circumferential direction groove 102 is specified to be wider than any of the groove width W1 of the first circumferential direction groove 100, the groove width W3 of the third circumferential direction groove 104 and the groove width W4 of the fourth circumferential direction groove 106. The groove width W2 of the second circumferential direction groove 102 is set within a range of from 5% to 15% of a ground contact width TW of the tread surface 18A. The second circumferential direction groove 102 according to the present exemplary embodiment is an example of the "circumferential direction groove having the widest groove width" of the present disclosure.

Viewed in the tire radial direction, the second circumferential direction groove 102 is disposed at a location that is separated in the tire width direction from the bonding portion 30. The second circumferential direction groove 102 is disposed such that at least a portion of the second circumferential direction groove 102 is located within a range of from 0% to 25% of the ground contact width TW along the tire width direction from the tire equator plane CL. The term "disposed at a location that is separated" as used here is intended to include a state in which, viewed in the tire radial direction, a tire width direction central position of the bonding portion 30 and a tire width direction central position of the second circumferential direction groove 102 are separated from one another in the tire width direction. A state is preferable in which the bonding portion 30 and the second circumferential direction groove 102 do not overlap as viewed in the tire radial direction (a non-superposed state).

As shown in Fig. 1, in the top tread 18, the first circumferential direction groove 100 is bounded at the vehicle width direction outer side by an outer side shoulder rib 108. At the vehicle width direction inner side of the outer side shoulder rib 108, the first circumferential direction groove 100 and the second circumferential direction groove 102 are divided by an outer side second rib 110, and at the vehicle width direction inner side of the outer side second rib 110, the second circumferential direction groove 102 and the third circumferential direction groove 104 are divided by a center rib 112. The tire equator plane CL passes through the center rib 112.

Further in the top tread 18, at the vehicle width direction inner side of the center rib 112, the third circumferential direction groove 104 and the fourth circumferential direction groove 106 are divided by an inner side second rib 114, and at the vehicle width direction inner side of the inner side second rib 114, the fourth circumferential direction groove 106 is bounded by an inner side shoulder rib 116.

The outer side shoulder rib 108, outer side second rib 110, center rib 112, inner side second rib 114 and inner side shoulder rib 116 correspond to land portions of the present disclosure.

### - Outer Side Shoulder Rib -

Plural first width direction grooves 118 are formed in the outer side shoulder rib 108 at the vehicle width direction outer side thereof. The first width direction grooves 118 are spaced apart in the tire circumferential direction. Plural sipes 120 are formed in the outer side shoulder rib 108 at the vehicle width direction inner side thereof. The sipes 120 are spaced apart in the tire circumferential direction. The first width direction grooves 118 and sipes 120 are disposed on common straight lines and connect together in a tire width direction central vicinity of the outer side shoulder rib 108.

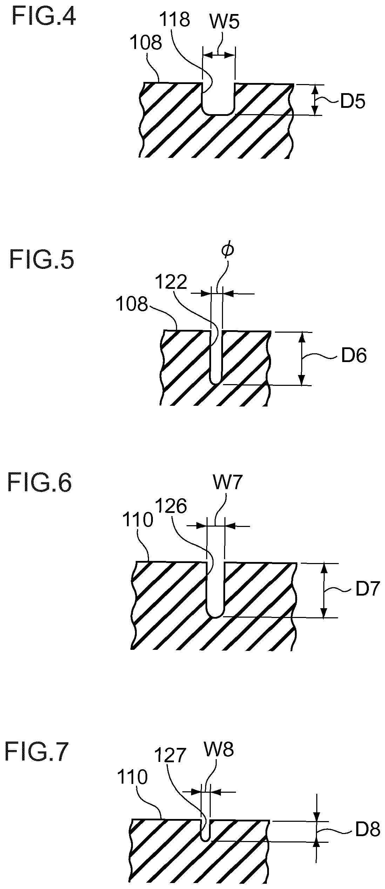

As shown in Fig. 4, a cross section of each first width direction groove 118 in a direction orthogonal to the length direction thereof appears as a substantial "U" shape. The first width direction groove 118 has a groove width that does not close up when the tire 10 is mounted to a vehicle and the top tread 18 is in ground contact, that is, a groove width such that one groove wall face and another groove wall face of the first width direction groove 118 that oppose one another do not come into contact when the top tread 18 is in ground contact. In contrast, each sipe 120 has a groove width that closes up when the top tread 18 is in ground contact, that is, a groove width such that one groove wall face and another groove wall face of the sipe 120 that oppose one another come into contact. A groove depth D5 of the first width direction groove 118 is shallower than the groove depths of the first circumferential direction groove 100, second circumferential direction groove 102, third circumferential direction groove 104 and fourth circumferential direction groove 106.

As shown in Fig. 1, the sipe 120 extends toward the vehicle width direction outer side from the first circumferential direction groove 100 and terminates within the rib. The first width direction groove 118 extends toward the vehicle width direction outer side from an end portion at the vehicle width direction outer side of the sipe 120 and terminates at a location beyond a ground contact end 18E. The sipes 120 are formed to be shallower than the first circumferential direction groove 100, second circumferential direction groove 102, third circumferential direction groove 104 and fourth circumferential direction groove 106.

The ground contact ends 18E of the top tread 18 are regions that are loaded with a maximum load performance when the tire 10 is mounted to a standard rim complying with the JATMA YEAR BOOK (from the Japan Automobile Tire Manufacturers Association, 2015 edition) and charged with air pressure to 100% of an air pressure (a maximum air pressure) corresponding with the maximum load performance (the bold-text load in the table of internal pressure against load performance) in the JATMA YEAR BOOK for the employed size and ply rating. A usage ground or fabrication ground complies with the respective standards when the TRA (Tire and Rim Association) standards and the ETRTO (European Tire and Rim Technical Organisation) standards are applied. The ground contact width TW is a dimension measured along the tire width direction from one of the ground contact ends 18E to another of the ground contact ends 18E. The ground contact width TW of the top tread 18 according to the present exemplary embodiment is 216 mm. Regions that actually make ground contact with a road surface between the one ground contact end 18E and the another ground contact end 18E of the top tread 18 are referred to as the ground contact.

The first width direction grooves 118 and sipes 120 according to the first exemplary embodiment are angled such that, when the circumferential direction of the tire 10 is in the direction of arrow A and the direction opposite to the direction of arrow A, the end portions of the first width direction grooves 118 and sipes 120 at the vehicle width direction outer sides thereof are in the direction of arrow A relative to the end portions thereof at the vehicle width direction inner sides. That is, the first width direction grooves 118 and sipes 120 are angled upward to the left in a plan view of the tread. In the present exemplary embodiment, groove width center lines of the first width direction grooves 118 and groove width center lines of the sipes 120 are angled at 45° or less relative to the tire width direction.

It is preferable if an opening area in the tread surface 18A of one of the first width direction grooves 118 is not more than 0.02% of a total ground contact area of the top tread 18 corresponding to one tire revolution, that is, an area at the outer periphery face of the top tread 18 that is capable of contact with the road surface. This is the area of the outer periphery face of the tire between the one ground contact end 18E and the another ground contact end 18E, which is to say, an area that can be found by multiplying the ground contact width TW of the top tread 18 by the circumferential direction length (that is, full circumference) of the top tread 18 corresponding to one tire revolution (that is, a full turn). It is also preferable if an opening area in the tread surface 18A of one of the first width direction grooves 118 is not more than 1.5% of an area of the ground contact surface (the ground contact area) of the top tread 18, that is, the area of a region of the top tread 18 that is actually in contact with the road surface.

It is further preferable if a region in which all of the first width direction grooves 118 are projected in the tire circumferential direction occupies not more than 1.5% of a region in which the belt layer 14 is disposed, that is, a region between one of the end portions 14E and another of the end portions 14E of the belt layer 14 in the tire width direction; that is, the opening area of one of the first width direction grooves 118 occupies not more than 1.5% of the area of a region A1 between the end portion 14E of the belt layer 14 and an imaginary line FL1 that extends in the tire circumferential direction through end portions of all the first width direction grooves 118 that are disposed at the sides of the first width direction grooves 118 closest to the tire equator plane CL (the area of the region A1 is the tire circumferential direction length (that is, full circumference) of the outer periphery face of the top tread 18 multiplied by a length of the outer periphery face of the top tread 18 measured along the tire width direction from the end portion 14E of the belt layer 14 to the end portions at the tire equator plane CL sides of the first width direction grooves 118).

It is preferable if the opening area in the tread surface 18A of one of the first width direction grooves 118 occupies not more than 5% of the area of the region A1 in the ground contact surface of the top tread 18.

It is also preferable if a length L1 of the first width direction grooves 118 measured along the tire width direction within the range of the ground contact width TW of the top tread 18 is set within a range of from 5% to 20% of the ground contact width TW.

It is preferable if a ratio of (the average value of) groove width of the first width direction grooves 118 to the pitch of the first width direction grooves 118 in the tire circumferential direction is set within a range of from 8% to 15%. In other words, it is preferable if a ratio of (the average value of) groove width of the first width direction grooves 118 to a distance measured along the tire circumferential direction between the groove width center line of one first width direction groove 118 and the groove width center line of another first width direction groove 118 that is adjacent in the tire circumferential direction is set within the range of from 8% to 15%.

Plural pin sipes 122 with the cross-sectional shape in Fig. 5 are provided in the outer side shoulder rib 108. The pin sipes 122 are formed at intermediate portions between the first width direction grooves 118 that are adjacent in the tire circumferential direction. The pin sipes 122 are small-diameter holes, opening portions of which are circular. The pin sipes 122 are formed with diameters such that wall surfaces thereof do not come into contact when the top tread 18 is in ground contact. The plural pin sipes 122 are disposed to be spaced apart from and parallel with the first width direction grooves 118.

The pin sipes 122 serve as compression stiffness reduction portions of the outer side shoulder rib 108. The pin sipes 122 lower the compression stiffness of block-shaped regions of the outer side shoulder rib 108 between the adjacent first width direction grooves 118. The meaning of the term "compression stiffness" is intended to include resistance to crushing when the outer side shoulder rib 108 is in contact with the road surface and subject to compression forces.

It is preferable if a diameter φ of the pin sipes 122 is within a range of from 1 mm to 2 mm. It is preferable if a depth D6 of the pin sipes 122 is within a range of from 20% to 100% of the groove depth D1 of the first circumferential direction groove 100 that is bounded by the outer side shoulder rib 108. An actual dimension of the depth D6 of the pin sipes 122 in the tire 10 according to the present exemplary embodiment is preferably within a range of from 1 mm to 4 mm.

### - Outer Side Second Rib -

As shown in Fig. 1, non-traversing sipes 124, shallow grooves 126 and shallow grooves 127 in the outer side second rib 110 are arranged alternatingly in the tire circumferential direction.

Each non-traversing sipe 124 includes a first width direction sipe portion 124A, a circumferential direction sipe portion 124B and a second width direction sipe portion 124C. The first width direction sipe portion 124A extends toward the vehicle width direction inner side from the first circumferential direction groove 100 and terminates within the rib. The circumferential direction sipe portion 124B extends in the opposite direction to the tire turning direction from the terminal portion of the first width direction sipe portion 124A within the rib. The second width direction sipe portion 124C extends toward the vehicle width direction outer side from an end portion at the opposite side of the circumferential direction sipe portion 124B from the side thereof at which the first width direction sipe portion 124A is formed, and the second width direction sipe portion 124C connects up with the first circumferential direction groove 100. Thus, the non-traversing sipe 124 is formed substantially in a "U" shape in the tread plan view.

The first width direction sipe portion 124A and second width direction sipe portion 124C are angled a little relative to the tire width direction, such that the tire width direction outer side end portions thereof are disposed at sides in the direction of arrow A relative to the tire width direction inner side end portions thereof. That is, the first width direction sipe portion 124A and second width direction sipe portion 124C are angled upward to the left in the tread plan view

Meanwhile, the circumferential direction sipe portion 124B is angled a little relative to the tire circumferential direction, such that the end portion at the side in the direction of arrow A is at the tire width direction outer side relative to the end portion thereof at the opposite side to the side in the direction of arrow A. That is, the circumferential direction sipe portion 124B is angled upward to the left in the tread plan view. The first width direction sipe portion 124A and second width direction sipe portion 124C are each disposed on lines of extension of the sipes 120 provided in the outer side shoulder rib 108.

Thus, the non-traversing sipe 124 is formed so as to not to traverse the outer side second rib 110 in the tire width direction, such that the stiffness of the outer side second rib 110 in the tire circumferential direction is not lowered excessively. The non-traversing sipe 124 has a groove width that closes up when the top tread 18 is in ground contact, that is, a groove width such that one groove wall face and another groove wall face of the non-traversing sipe 124 that oppose one another come into contact. The non-traversing sipes 124 according to the present exemplary embodiment are formed to be shallower than the first circumferential direction groove 100, second circumferential direction groove 102, third circumferential direction groove 104 and fourth circumferential direction groove 106.

Each shallow groove 126 is formed a little to the vehicle width direction inner side relative to a width direction central portion of the outer side second rib 110. The shallow groove 126 extends in a linear shape that is angled a little relative to the tire circumferential direction such that an end portion thereof at the side in the direction of arrow A is at the vehicle width direction outer side relative to an end portion at the opposite side to the side in the direction of arrow A. Both the length direction end portions of the shallow groove 126 terminate within the rib.

As shown in Fig. 6, a cross section of the shallow groove 126 in a direction orthogonal to the length direction of the shallow groove 126 appears as a substantial "U" shape. The shallow groove 126 has a groove width that does not close up when the top tread 18 is in ground contact, that is, a groove width such that one groove wall face and another groove wall face of the shallow groove 126 that oppose one another do not come into contact. The shallow groove 126 is formed with a narrower groove width than the first circumferential direction groove 100, second circumferential direction groove 102, third circumferential direction groove 104 and fourth circumferential direction groove 106.

The shallow groove 126 is formed with a groove depth D7 that is shallower than the groove depths of the first circumferential direction groove 100, second circumferential direction groove 102, third circumferential direction groove 104 and fourth circumferential direction groove 106. The shallow grooves 126 according to the present exemplary embodiment have a length of 20 mm, a groove width W7 of 2 mm and a groove depth D7 of 6.5 mm.

The shallow grooves 126 serve as compression stiffness reduction portions of the outer side second rib 110. The shallow grooves 126 lower the compression stiffness of block-shaped regions of the outer side second rib 110 between adjacent non-traversing sipes 124.

The shallow grooves 127 are formed at the side of the outer side second rib 110 at which the second circumferential direction groove 102 is disposed. The shallow grooves 127 are arranged along lines of extension of the first width direction sipe portions 124A. As shown in Fig. 7, a cross section of each shallow groove 127 in a direction orthogonal to the length direction of the shallow groove 127 appears as a substantial "U" shape. The shallow groove 127 is formed with a groove width W8 that is narrower than the shallow groove 126 and a groove depth D8 that is shallower than the shallow groove 126. The shallow grooves 127 according to the present exemplary embodiment have a groove width W8 of 1 mm and a groove depth D8 of 2 mm. Each shallow groove 127 connects up with a shallow groove 134 formed in a floor portion of the second circumferential direction groove 102. The shallow grooves 134 according to the present exemplary embodiment are an example of "groove portions" of the present disclosure.

### - Center Rib -

First angled grooves 128 and second angled grooves 130 are arranged alternatingly in the center rib 112, spaced apart in the tire circumferential direction.

Each first angled groove 128 extends from the second circumferential direction groove 102 to the third circumferential direction groove 104 at an angle with respect to the tire width direction, and is connected with the third circumferential direction groove 104 via a short groove 132, which is described below.

The first angled groove 128 is angled relative to the tire width direction such that an end portion of the first angled groove 128 at the vehicle width direction inner side is at the side in the direction of arrow A relative to an end portion at the vehicle width direction outer side. That is, the first angled groove 128 is angled upward to the right in the tread plan view. An inclination angle of the first angled groove 128 relative to the tire width direction is set to around 45°.

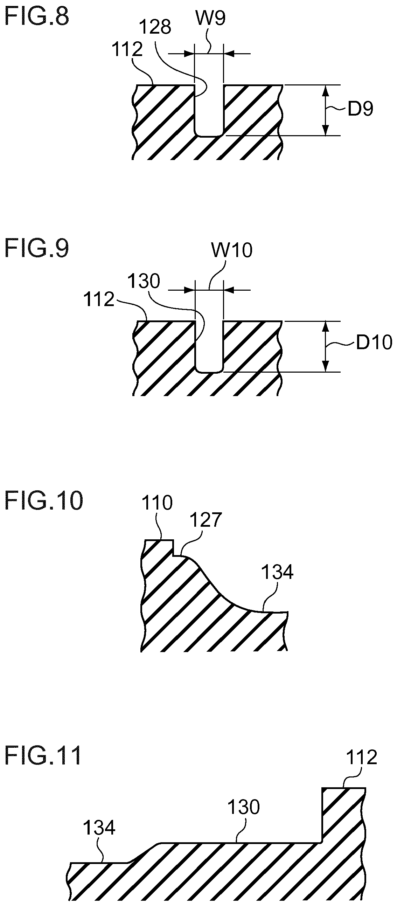

As shown in Fig. 8, a cross section of the first angled groove 128 in a directional orthogonal to the length direction of the first angled groove 128 appears as a substantial "U" shape. A groove width W9 of the first angled groove 128 is narrower than the first circumferential direction groove 100, second circumferential direction groove 102, third circumferential direction groove 104 and fourth circumferential direction groove 106, but is a groove width that does not close up when the top tread 18 is in ground contact, that is, a groove width such that one groove wall face and another groove wall face of the first angled groove 128 that oppose one another do not come into contact. The first angled grooves 128 according to the present exemplary embodiment have a groove width W9 of 3.2 mm and a groove depth D9 of 6.5 mm.

The short grooves 132 that connect up with the third circumferential direction groove 104 are formed in the center rib 112. Each short groove 132 extends from an end portion at the vehicle width direction inner side of the first angled groove 128 toward the third circumferential direction groove 104. The short groove 132 is angled the opposite way to the first angled groove 128 relative to the tire width direction. That is, the short groove 132 is angled upward toward the left in the tread plan view. The short groove 132 is formed with a groove depth the same as the first angled groove 128. The short groove 132 is formed with a narrower groove width than the first angled groove 128, but has a groove width that does not close up when the top tread 18 is in ground contact, that is, a groove width such that one groove wall face and another groove wall face of the short groove 132 that oppose one another do not come into contact.

Each second angled groove 130 extends from the second circumferential direction groove 102 toward the vehicle width direction inner side at an angle and terminates within the rib of the center rib 112 in a vicinity of the third circumferential direction groove 104. The second angled groove 130 is angled relative to the tire width direction such that an end portion at the vehicle width direction inner side of the second angled groove 130 is at the side in the direction of arrow A relative to an end portion at the vehicle width direction outer side. That is, the second angled groove 130 is angled upward to the right in the tread plan view. The second angled grooves 130 are provided to be parallel with the first angled grooves 128.

As shown in Fig. 9, a cross section of each second angled groove 130 in a direction orthogonal to the length direction of the second angled groove 130 appears as a substantial "U" shape. A groove width W10 of the second angled groove 130 is narrower than the first circumferential direction groove 100, second circumferential direction groove 102, third circumferential direction groove 104 and fourth circumferential direction groove 106, but is a groove width that does not close up when the top tread 18 is in ground contact, that is, a groove width such that one groove wall face and another groove wall face of the second angled groove 130 that oppose one another do not come into contact. The second angled grooves 130 according to the present exemplary embodiment have a groove width W10 of 3.4 mm and a groove depth D10 of 6.5 mm.

As shown in Fig. 1 and Fig. 2, a plural number of the shallow grooves 134 are formed in the floor portion of the second circumferential direction groove 102, spaced apart in the tire circumferential direction. Each shallow groove 134 extends from a groove wall at one tire width direction side of the second circumferential direction groove 102 to a groove wall at the other tire width direction side. The shallow grooves 134 connect with the shallow grooves 127 in the outer side second rib 110 and the second angled grooves 130 in the center rib 112. Each shallow groove 134 is angled at a relatively small angle of less than 45° with respect to the tire circumferential direction, such that an end portion of the shallow groove 134 at the site that connects with the shallow groove 127 is disposed at the tire width direction outer side relative to an end portion of the shallow groove 134 at the side that connects with the second angled groove 130.

As shown in Fig. 2, a groove depth D11 of the shallow groove 134 measured from (a deepest region of) the floor portion of the second circumferential direction groove 102 is 0.5 mm. Groove floors of the shallow groove 134 and the shallow groove 127 connect with one another as shown in Fig. 10, and groove floors of the shallow groove 134 and the second angled groove 130 connect with one another as shown in Fig. 11.

### - Inner Side Second Rib -

Sipes 140 and narrow grooves 142 are alternatingly arranged in the inner side second rib 114, spaced apart in the tire circumferential direction.

Each sipe 140 has a groove width that closes up when the top tread 18 is in ground contact, that is, a groove width such that one groove wall face and another groove wall face of the sipe 140 that oppose one another come into contact. One end portion of each sipe 140 connects up with the third circumferential direction groove 104, and another end portion connects up with the fourth circumferential direction groove 106. In other words, the sipe 140 traverses the inner side second rib 114 in the tire width direction.

The sipe 140 is angled relative to the tire width direction such that an end portion of the sipe 140 at the vehicle width direction outer side is at the side in the direction of arrow A relative to an end portion at the vehicle width direction inner side. In other words, the sipe 140 is angled upward to the left in the tread plan view. The inclination angle of the sipe 140 relative to the tire width direction is set to not more than 45°. The sipes 140 according to the present embodiment are formed to be shallower than the first circumferential direction groove 100, second circumferential direction groove 102, third circumferential direction groove 104 and fourth circumferential direction groove 106.

Both end portions of each narrow groove 142 terminate within the inner side second rib 114. Pairs of the narrow grooves 142 are arranged between adjacent sipes 140, spaced apart along a line. The pairs of narrow grooves 142 are formed to be parallel with the sipes 140.

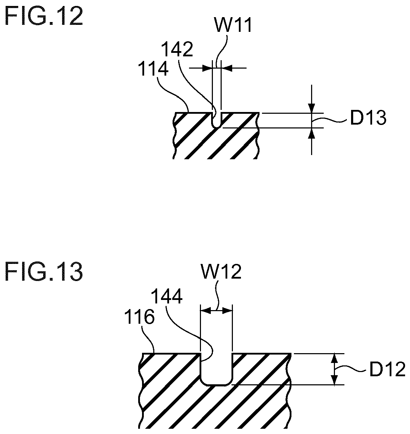

As shown in Fig. 12, a cross section of each narrow groove 142 in a direction orthogonal to the length direction of the narrow groove 142 appears as a substantial "U" shape. A groove width W11 of the narrow groove 142 is narrower than the first circumferential direction groove 100, second circumferential direction groove 102, third circumferential direction groove 104 and fourth circumferential direction groove 106. It is preferable if the narrow groove 142 has a groove width that does not close up when the top tread 18 is in ground contact, that is, a groove width such that one groove wall face and another groove wall face of the narrow groove 142 that oppose one another do not come into contact.

It is preferable if a groove depth D13 of the narrow grooves 142 is formed to be shallower than the groove depths of the first circumferential direction groove 100, second circumferential direction groove 102, third circumferential direction groove 104 and fourth circumferential direction groove 106. The narrow grooves 142 according to the present exemplary embodiment have lengths of 8.5 mm, a groove width W11 of 1 mm and a groove depth D13 of 2 mm. These narrow grooves 142 serve as compression stiffness reduction portions.

### - Inner Side Shoulder Rib -

Inner side width direction grooves 144 and sipes 146 are formed in the inner side shoulder rib 116, spaced apart and alternating in the tire circumferential direction.

An end portion at the vehicle width direction outer side of each inner side width direction groove 144 is disposed at the vehicle width direction outer side relative to the ground contact end 18E of the top tread 18 and terminates within the inner side shoulder rib 116 in a vicinity of the fourth circumferential direction groove 106. An end portion at the vehicle width direction inner side of the inner side width direction groove 144 is disposed at the vehicle width direction inner side relative to the ground contact end 18E.

The inner side width direction grooves 144 are angled a little relative to the tire width direction, such that the tire width direction outer side end portions thereof are disposed at sides in the direction of arrow A relative to the tire width direction inner side end portions thereof. That is, the inner side width direction grooves 144 are angled upward to the left in the tread plan view.

As shown in Fig. 13, a cross section of each inner side width direction groove 144 in a direction orthogonal to the length direction of the inner side width direction groove 144 appears as a substantial "U" shape. A groove width W12 of the inner side width direction groove 144 is narrower than the groove widths of the first circumferential direction groove 100, second circumferential direction groove 102, third circumferential direction groove 104 and fourth circumferential direction groove 106, but is a groove width that does not close up when the top tread 18 is in ground contact, that is, a groove width such that one groove wall face and another groove wall face of the inner side width direction groove 144 that oppose one another do not come into contact.

A groove depth D12 of the inner side width direction groove 144 is formed to be shallower than the groove depths of the first circumferential direction groove 100, second circumferential direction groove 102, third circumferential direction groove 104 and fourth circumferential direction groove 106. The inner side width direction grooves 144 according to the present exemplary embodiment have a groove width W12 of 3.8 mm and a groove depth D12 of 5.2 mm.

It is preferable if an opening area in the tread surface 18A of one of the inner side width direction grooves 144 is not more than 0.02% of an area at the outer periphery face of the top tread 18 that is capable of contact with the road surface. This is the area of the outer periphery face of the tire between the one ground contact end 18E and the another ground contact end 18E, which is to say, an area that can be found by multiplying the ground contact width TW of the top tread 18 by the circumferential direction length (that is, full circumference) of the top tread 18 corresponding to one tire revolution (that is a full turn).

It is also preferable if the opening area in the tread surface 18A of one of the inner side width direction grooves 144 is not more than 1.5% of the ground contact area of the top tread 18, that is, the area of a region of the top tread 18 that is actually in contact with the road surface.

It is further preferable if a region in which all of the inner side width direction grooves 144 are projected in the tire circumferential direction occupies not more than 1.5% of a region in which the belt layer 14 is disposed, that is, a region between the one end portion 14E and the another end portion 14E of the belt layer 14 in the tire width direction; that is, the opening area of one of the inner side width direction grooves 144 in the tread surface 18A occupies not more than 1.5% of the area of a region A2 between the end portion 14E of the belt layer 14 and an imaginary line FL2 that extends in the tire circumferential direction through end portions of all the inner side width direction grooves 144 that are disposed at the sides of the inner side width direction grooves 144 closest to the tire equator plane CL (the area of the region A2 is the tire circumferential direction length (that is, full circumference) of the outer periphery face of the top tread 18 multiplied by a length of the outer periphery face of the top tread 18 measured along the tire width direction from the end portion 14E of the belt layer 14 to the end portions at the tire equator plane CL sides of the inner side width direction grooves 144).

It is preferable if the opening area in the tread surface 18A of one of the inner side width direction grooves 144 occupies not more than 5% of the area of the region A2 in the ground contact surface of the top tread 18.

It is also preferable if a length L2 of the inner side width direction grooves 144 measured along the tire width direction within the range of the ground contact width TW of the top tread 18 is set within a range of from 10% to 20% of the ground contact width TW.

It is preferable if a ratio of (the average value of) groove width of the inner side width direction grooves 144 to the pitch of the inner side width direction grooves 144 in the tire circumferential direction is set within a range of from 8% to 15%. In other words, it is preferable if a ratio of (the average value of) groove width of the inner side width direction grooves 144 to a distance measured along the tire circumferential direction between the groove width center line of one inner side width direction groove 144 and the groove width center line of another inner side width direction groove 144 that is adjacent in the tire circumferential direction is set within the range of from 8% to 15%.

Each sipe 146 has a groove width that closes up when the top tread 18 is in ground contact, that is, a groove width such that one groove wall face and another groove wall face of the sipe 146 that oppose one another come into contact. The sipes 146 are formed in parallel with the inner side width direction grooves 144. One end portion of each sipe 146 connects up with the fourth circumferential direction groove 106, and the other end portion is located at the vehicle width direction inner side relative to the ground contact end 18E of the top tread 18. In other words, the sipe 146 traverses the inner side shoulder rib 116 in the tire width direction inner side the ground contact surface of the top tread 18. The sipes 146 are disposed on lines of extension of the sipes 140 in the inner side second rib 114.

The tire 10 according to the present exemplary embodiment is fabricated by arranging the belt layer 14, the belt upper reinforcement layer 15 and the side reinforcement layer 13 on an outer face of the tire frame member 12, which is molded beforehand, then preparing a green tire by arranging unvulcanized rubber to form the side treads 16 and the top tread 18 on outer faces, loading the green tire in a mold and vulcanization-molding the green tire.

### - Operation -

Now, operation of the tire 10 according to the present exemplary embodiment is described.

In the tire 10, because the tire frame member 12 is formed of a resin material, out-of-plane bending stiffness is higher than in an ordinary rubber tire in which the tire frame member 12 is a carcass. Therefore, even though the groove width W2 of the second circumferential direction groove 102 whose groove width is widest among the plural circumferential direction grooves formed in the top tread 18 is set within the range of from 5% to 15% of the ground contact width TW of the tread surface 18A and drainage is greatly improved, out-of-plane bending stiffness may be assured and occurrences of buckling originating from the second circumferential direction groove 102 may be suppressed.

In particular, because the groove width W2 of the second circumferential direction groove 102 is set to at least 5% of the ground contact width TW, noise of a resonating air column reverberating between the two groove walls of the second circumferential direction groove 102 during running may be suppressed.

In the tire 10, because the second circumferential direction groove 102 is disposed at a location that is separated in the tire width direction from the bonding portion 30 formed at the crown portion 24, as seen in the tire radial direction, out-of-plane bending stiffness in the tire width direction may be more assured than in, for example, a structure in which the bonding portion 30 and the second circumferential direction groove 102 are disposed to overlap.

In the tire 10, because at least a portion of the second circumferential direction groove 102 is disposed within the range of from 0% to 25% of the ground contact width TW along the tire width direction from the tire equator plane CL, drainage in the vicinity of the tire equator, at which the length of the ground contact is longest, may be greatly improved.

In the tire 10, because the shallow grooves 134 are formed in the floor portion of the second circumferential direction groove 102, drainage capacity of the second circumferential direction groove 102 is improved compared to, for example, a structure in which the shallow grooves 134 are not formed in the floor portion of the second circumferential direction groove 102. Moreover, because the shallow grooves 134 in the floor portion of the second circumferential direction groove 102 are formed to be spaced apart in the tire circumferential direction, out-of-plane bending stiffness of a region corresponding to the second circumferential direction groove 102 may be more assured than in, for example, a structure in which the shallow grooves 134 are formed in the floor portion of the second circumferential direction groove 102 to be continuous in the tire circumferential direction.

In the tire 10, because the cross section of the second circumferential direction groove 102 in the direction orthogonal to the length direction of the second circumferential direction groove 102 is a substantially semicircular shape as shown in Fig. 2, out-of-plane bending stiffness in the tire width direction may be more assured when an input force in the tire width direction acts on the top tread 18, during cornering or the like, than in, for example, a structure in which this cross section of the second circumferential direction groove 102 is a substantial "U" shape.

## Claims

1. A tire (10), comprising:
a tire frame member (12) formed of a resin material, the tire frame member (12) including:
a bead portion (20),
a side portion (22) that extends toward a tire radial direction outer side from the bead portion (20), and
a crown portion (24) that extends toward a tire width direction inner side from the side portion (22); and
a tread formed of a rubber material, the tread being disposed at the tire radial direction outer side of the tire frame member (12), a plurality of circumferential direction grooves that extend in a tire circumferential direction being formed in a tread surface (18A), and a groove width of a circumferential direction groove having a widest groove width along the tire width direction being within a range of from 5% to 15% of a ground contact width (TW) of the tread surface (18A),
wherein the ground contact ends (18E) of a top tread (18) are regions that are loaded with a maximum load performance when the tire (10) is mounted to a standard rim complying with the JATMA YEAR BOOK (from the Japan Automobile Tire Manufacturers Association, 2015 edition) and charged with air pressure to 100% of an air pressure corresponding with the maximum load performance (the bold-text load in the table of internal pressure against load performance) in the JATMA YEAR BOOK for the employed size and ply rating;
the ground contact width (TW) is a dimension measured along the tire width direction from one of the ground contact ends (18E) to another of the ground contact ends (18E);
the resin material of the tire frame member (12) is a thermoplastic resin or a thermoplastic elastomer,
a plurality of tire structure members are bonded together to form the tire frame member (12);
a bonding portion (30) that bonds the plurality of the tire structure members together is formed continuously in the tire circumferential direction at the crown portion (24);
viewed in the tire radial direction, the circumferential direction groove having the widest groove width is disposed at a location that is separated in the tire width direction from the bonding portion (30), **characterized in that**
a belt layer (14) is provided at an outer periphery face of the crown portion (24), and the belt layer (14) is formed by winding cords covered with resin in helical patterns along the tire circumferential direction.

2. The tire (10) according to claim 1, wherein at least a portion of the circumferential direction groove having the widest groove width is disposed within a range of from 0% to 25% of the ground contact width (TW) along the tire width direction from a tire equatorial plane (CL).

3. The tire (10) according to claim 1 or claim 2, wherein a plurality of groove portions extending in the tire circumferential direction are formed in a floor portion of the circumferential direction groove having the widest groove width, the groove portions being spaced apart in the tire circumferential direction.

## Patentansprüche

1. Reifen (10), umfassend:
ein Reifengerüstglied (12), welches aus Harzmaterial besteht, wobei das Reifengerüstglied (12) umfasst:
einen Wulstabschnitt (20),
einen Seitenabschnitt (22), welcher sich in der Reifenradialrichtung zu einer Außenseite hin von dem Wulstabschnitt (20) weg erstreckt, und
einen Kronenabschnitt (24), welcher sich in der Reifenbreitenrichtung zu einer Innenseite hin von dem Seitenabschnitt (22) weg erstreckt; und
eine Lauffläche, welche aus Gummimaterial besteht, wobei die Lauffläche an der Außenseite, in der Reifenradialrichtung, des Reifengerüstglieds (12) angeordnet ist, wobei eine Mehrzahl von Umfangsrichtungsrillen, welche sich in einer Reifenumfangsrichtung erstrecken, in einer Lauffläche (18A) geformt ist, und wobei eine Rillenbreite einer Umfangsrichtungsrille, welche die größte Rillenbreite entlang der Reifenbreitenrichtung aufweist, innerhalb eines Bereichs zwischen 5% und 15% einer Bodenkontaktbreite (TW) der Lauffläche (18A) liegt,
wobei die Bodenkontaktenden (18E) einer oberen Lauffläche (18) Bereiche sind, welche mit der maximalen Belastungskapazität belastet sind, wenn der Reifen (10) auf einer Standardfelge montiert ist, welche mit dem JATMA YEAR BOOK (der Japan Automobile Tire Manufacturers Association, Ausgabe 2015) übereinstimmt, und mit einem Luftdruck bis 100% eines Luftdrucks befüllt ist, welcher der maximalen Belastungskapazität (die in Fettschrift angegebene Belastung in der Tabelle des Innendrucks als Funktion der Belastungskapazität) in dem JATMA YEAR BOOK für die angewendete Größe und Lagenkennziffer entspricht;
die Bodenkontaktbreite (TW) eine Dimension ist, welche entlang der Reifenbreitenrichtung von einem der Bodenkontaktenden (18E) bis zu einem anderen der Bodenkontaktenden (18E) gemessen wird;
das Harzmaterial des Reifengerüstglieds (12) ein thermoplastisches Harz oder ein thermoplastisches Elastomer ist,
eine Mehrzahl von Reifenstrukturglieder miteinander verbunden sind, um das Reifengerüstglied (12) zu bilden;
ein Bindungsabschnitt (30), welcher die Mehrzahl von Reifenstrukturglieder miteinander verbindet, kontinuierlich in der Reifenumfangsrichtung an dem Kronenabschnitt (24) gebildet ist;
die Umfangsrichtungsrille, welche die größte Rillenbreite aufweist, wenn in der Radialrichtung gesehen, an einer Stelle angeordnet ist, welche in der Reifenbreitenrichtung von dem Bindungsabschnitt (30) getrennt ist, **dadurch gekennzeichnet, dass**
eine Gürtelschicht (14) an einer Außenumfangsfläche des Kronenabschnitts (24) bereitgestellt ist und die Gürtelschicht (14) geformt ist, indem Kords, welche mit Harz beschichtet sind, in einem schraubenförmigen Muster entlang der Reifenumfangsrichtung gewickelt werden.

2. Reifen (10) nach Anspruch 1, wobei mindestens ein Abschnitt der Umfangsrichtungsrille, welche die größte Rillenbreite aufweist, innerhalb eines Bereichs zwischen 0% und 25% der Bodenkontaktbreite (TW) entlang der Reifenbreitenrichtung von einer Reifenäquatorialebene (CL) angeordnet ist.

3. Reifen (10) nach Anspruch 1 oder Anspruch 2, wobei eine Mehrzahl von Rillenabschnitten, welche sich in der Reifenumfangsrichtung erstrecken, in einem Grundabschnitt der Umfangsrichtungsrille angeordnet ist, welche die größte Rillenbreite aufweist, wobei die Rillenabschnitte voneinander in der Reifenumfangsrichtung beabstandet sind.

## Revendications

1. Bandage pneumatique (10), comprenant :
un élément de cadre du bandage pneumatique (12) composé d'un matériau de résine, l'élément de cadre du bandage pneumatique (12) incluant :
une partie de talon (20) ;
une partie de flanc (22) s'étendant vers un côté externe, dans une direction radiale du bandage pneumatique, de la partie de talon (20) ; et
une partie de sommet (24) s'étendant vers un côté interne, dans la direction de la largeur du bandage pneumatique, de la partie de flanc (22) ; et
une bande de roulement composée d'un matériau de caoutchouc, la bande de roulement étant disposée au niveau du côté externe, dans la direction radiale du bandage pneumatique, de l'élément de cadre du bandage pneumatique (12), plusieurs rainures à direction circonférentielle s'étendant dans une direction circonférentielle du bandage pneumatique étant formées dans une surface de la bande de roulement (18A), et une largeur de rainure de la rainure à direction circonférentielle ayant une largeur maximale de rainure le long de la direction de la largeur du bandage pneumatique, étant comprise dans un intervalle représentant 5% à 15% d'une largeur de contact au sol (TW) de la surface de la bande de roulement (18A) ;
dans lequel les extrémités de contact au sol (18E) d'une bande de roulement supérieure (18) constituent des régions chargées d'une performance de charge maximale, lorsque le bandage pneumatique est monté sur une jante standard conforme au JATMA YEAR BOOK (de la Japan Automobile Tire Manufacturers Association, édition de 2015) et chargées avec une pression d'air représentant 100% d'une pression d'air correspondant à la performance de charge maximale (texte en caractères gras dans le tableau indiquant la pression interne par rapport à la performance de charge) dans le JATMA YEAR BOOK pour la taille et l'indice de résistance utilisés ;
la largeur de contact au sol (TW) est une dimension mesurée le long de la direction de la largeur du bandage pneumatique de l'une des extrémités de contact au sol (18E) vers une autre des extrémités de contact au sol (18E) ;
le matériau de résine de l'élément de cadre du bandage pneumatique (12) est constitué par une résine thermoplastique ou un élastomère thermoplastique ;
plusieurs éléments de structure du bandage pneumatique sont liés les uns aux autres pour former un élément de cadre du bandage pneumatique (12) ;
une partie de liaison (30) reliant les plusieurs éléments de structure du bandage pneumatique est formée de manière continue, dans la direction circonférentielle du bandage pneumatique, au niveau de la partie de sommet (24) ;
vue dans la direction radiale du bandage pneumatique, la rainure à direction circonférentielle ayant la largeur de rainure maximale est disposée au niveau d'un emplacement séparé, dans la direction de la largeur du bandage pneumatique, de la partie de liaison (30); **caractérisé en ce que** :
une couche de ceinture (14) est agencée au niveau d'une face périphérique externe de la partie de sommet (24), la couche de ceinture (14) étant formée en enroulant des câblés revêtus de résine dans des motifs hélicoïdaux, le long de la direction circonférentielle du bandage pneumatique.

2. Bandage pneumatique (10) selon la revendication 1, dans lequel au moins une partie de la rainure à direction circonférentielle ayant la largeur de rainure maximale est disposée dans un intervalle représentant 0% à 25% de la largeur de contact au sol (TW), le long de la direction de la largeur du bandage pneumatique, à partir d'un plan équatorial du bandage pneumatique (CL).

3. Bandage pneumatique (10) selon les revendications 1 ou 2, dans lequel plusieurs parties de rainure s'étendant dans la direction circonférentielle du bandage pneumatique sont formées dans une partie de fond de la rainure à direction circonférentielle ayant la largeur de rainure maximale, les parties de rainure étant espacées dans la direction circonférentielle du bandage pneumatique.
